# EUROPÄISCHE PATENTSCHRIFT

(11) **EP 3 106 780 B1**
(45) Veröffentlichungstag und Bekanntmachung des Hinweises auf die Patenterteilung: **22.11.2017**
(21) Anmeldenummer: 16174350.5
(22) Anmeldetag: 14.06.2016
(51) Int. Cl.: F25B 15/04, F25B 49/04

(54) **WÄRMEPUMPENANLAGE**
HEAT PUMP ASSEMBLY
INSTALLATION DE POMPES À CHALEUR

(30) Priorität: 17.06.2015 DE 102015007658
(43) Veröffentlichungstag der Anmeldung: 21.12.2016
(73) Patentinhaber: Vaillant GmbH, 42859 Remscheid (DE)
(72) Erfinder: Badenhop, Thomas, 51688 Wipperfürth (DE); Salg, Frank, 42897 Remscheid (DE); Spahn, Hans-Josef, 40699 Erkrath (DE)
(74) Vertreter: Popp, Carsten

(56) Entgegenhaltungen:
- EP-A1- 1 150 077
- DE-A1-102012 112 347
- DE-A1-102013 106 412
- DE-C1- 19 525 064

## Beschreibung

Die Erfindung betrifft eine Wärmepumpenanlage, insbesondere eine Gas-Absorptionswärmepumpe mit Kältemittelrückhaltung.

Absorptionswärmepumpen und -kältemaschinen erlauben die effiziente Nutzung von fossilen Brennstoffen durch Einbindung von erneuerbaren Energien. Dadurch steigt die Energieeffizienz, insbesondere die Primärenergieeffizienz an. Die Absorptionswärmepumpe kann seit 2009 als serienreif auch für das Ein- und Mehrfamilienhaus angesehen werden und ist hinsichtlich Effizienz und Leistungsfähigkeit mit anderen Gas-Hocheffizienztechnologien durchaus vergleichbar. Jedoch wird in Gas-Absorptionswärmepumpe gerne die Stoffpaarung Ammoniak (NH3) als Kältemittel und Wasser (H2O) als Lösungsmittel verwendet. Während Wasser als Lösungsmittel hinsichtlich der Umweltverträglichkeit unproblematisch ist, ist Ammoniak ein Gefahrstoff der besondere Sicherheitsvorkehrungen im Systemkontext erfordert.

Das Funktionsprinzip einer Absorptionswärmepumpe ist ähnlich der Arbeitsweise einer Absorptionskältemaschine. Der Unterschied zwischen beiden ist die Nutzerseite. Während die Absorptionskältemaschine das Kältemittel auf niedrigem Temperaturniveau im Verdampfer verdampft und so seiner Umgebung Wärme (Gebäude) entzieht (Kühlung), nutzt die Wärmepumpe die Wärme, welche beim Phasenwechsel des Kältemittels im Verflüssiger mit der Umgebung (z.B. Heizkreis) abgegeben wird.
i. Das im Verdampfer produzierte Kältemittelgas wird über die Leitung in den Absorber gesaugt und dort durch eine Lösung, z.B. Wasser mit niedriger Konzentration absorbiert.
ii. Die sich im Absorber mit dem Kältemittel angereicherte Lösung wird mittels der Lösungsmittelpumpe über Leitungen zum Austreiber gefördert.
iii. Im Austreiber oder Desorber wird die geförderte Lösung durch Wärmezufuhr, z.B. ein Erdgasbrenner erhitzt und das Kältemittel wird ausgedampft bzw. ausgetrieben.
iv. Die im Austreiber verarmte Lösung wird über ein Expansionsventil dem Absorber wieder zugeführt. Somit wird eine erneute Aufnahme von Kältemittelgas aus dem Verdampfer ermöglicht.
v. Der durch Austreibung entstehende Kältemitteldampf wird über die Leitung durch den Verflüssiger geführt. Durch Wärmeübertragung mit der zu erwärmenden Umgebung (z.B. Heizkreis) wird das Kältemittel im Verflüssiger kondensiert und anschließend durch ein Expansionsventil entspannt. Bei diesem Prozess sinkt sowohl der Druck als auch die Temperatur des Kältemittels. Durch die Wärmeübertragung mit möglichst konstantem Temperaturniveau (z.B. Erdwärme) wird das Kältemittel im Verdampfer verdampft. Der Prozess beginnt nun wieder bei Punkt (i).

Für die Nutzung von Ammoniak als Kältemittel oder eines leicht entzündlichen Kältemittels sind alle für eine technische Anwendung relevanten Sicherheitsaspekte einzuhalten, welche insbesondere beschrieben sind in DIN EN 378 (Kälteanalgen und Wärmepumpen - Sicherheitstechnische Aspekte und umweltrelevante Anforderungen), DIN 8975 (Kälteanlagen - sicherheitstechnische Grundsätze für Gestaltung, Ausrüstung, Aufstellung und Betreiben), VBG 20 (Unfallverhütungsvorschrift), TRAS 110 (Sicherheitstechnische Anforderungen an Ammoniak-Kälteanlagen) und in dem Leitfaden zur Planung zum Betrieb von Ammoniak-Kälteanlagen vom TÜV Süd.

Ammoniak ist ein natürliches Kältemittel mit sehr vielen positiven Eigenschaften. Die größten Nachteile von Ammoniak sind dessen Giftigkeit und Brennbarkeit. Bei Umgebungsbedingungen ist Ammoniak ein farbloses, stark stechend riechendes Gas (Siedetemperatur -33,4 °C). Das Dichteverhältnis be trägt 0,6. Trockenes Ammoniak entweicht, ähnlich wie Wasserstoff entgegengesetzt zur Gravitation (Normalen), nach oben.

Ammoniak ist ein brennbares Gas, das mit trockener Luft im Konzentrationsverhältnis von 15 bis 30 Vol.-% ein zünd- und explosionsfähiges Gemisch bildet. Die Zündtemperatur liegt bei ca. 630°C . Die Anwesenheit von Luftfeucht igkeit schränkt die Zündfähigkeit weiter ein. Aufgrund seiner Affinität zur Luftfeuchtigkeit ist Ammoniak als schwer entzündliches Gas einzustufen. Eine echte Explosionsgefahr besteht nicht.

Wesentlich für den Umgang mit Ammoniak ist dessen Giftigkeit und die daraus resultierenden nachhaltigen Gesundheitsschäden. Auf Grund seines stark stechenden Geruchs ist Ammoniak bereits ab einer Konzentration von 5ppm wahrnehmbar. Bei ausreichender Fluchtmöglichkeiten wird durch diese starke Warnwirkung in den meisten Fällen eine ernsthafte Gefährdung der Gesundheit (auch Lebensgefahr) verhindert. Größere Ammoniak-Konzetrationen wirken stark reizend auf Augen, Nase und Kehle und veranlassen den reflexartig zur Flucht. Konzentrationen von 5.000ppm und darüber führen zur Lähmung der Atemwege und damit bereits nach kurzer Zeit zum Tod durch Ersticken.

Ammoniakgas besitzt kein Ozonabbaupotential und kann wegen seiner kurzen atmosphärischen Lebensdauer in geringen Mengen unbehandelt in die Atmosphäre abgegeben werden.

Ammoniakführende Anlagen sind so auszulegen, zu konstruieren, zu installieren und zu betreiben, dass die mechanischen, thermischen und chemischen Beanspruchungen, die beim Betrieb und/oder Stillstand der Anlage auftreten können, standhalten und dicht bleiben (primäres Schutzkonzept oder -maßnahmen).

Schäden an der Anlage können insbesondere durch Außenkorrosion, Rohrleitungsschwingungen oder grobe Fertigungsmängel verursacht werden. Ein dauerhafter Korrosionsschutz, eine Dampfdiffusionsbremse auf der Kältedämmungsseite, sorgfältige Leitungsführung zur Vermeidung von Schwingungen und Flüssigkeitsschlägen sowie regelmäßige fachkundige Wartung bewahren die Dichtheit einer Anlage und vermindern die Wahrscheinlichkeit einer unerwarteten, ggf. tödlichen Freisetzung von Ammoniak im Installationsraum. Die primären Schutzmaßnahmen sind im technischen Regelwerk (u.a. oben aufgeführt.) hinreichend beschrieben.

Sekundäre Schutzmaßnahmen müssen dann greifen, wenn die primären Schutzmaßnahmen versagen und es damit zu einer unerwarteten Freisetzung von Ammoniak kommt. Hierzu zählen als Maßnahmen Gasabzug oder Absaugung durch Lüftung (möglichst gasdichtes Gehäuse aus dem freiwerdendes Ammoniak abgesaugt und über Rohrleitungen an die Umgebung abgeführt werden kann, Auffangwanne für austretendes flüssiges Ammoniak und Absperreinrichtungen, welche im Leckagefall das Nachströmen von Ammoniak verhindern.

Zu einer effektiven Schadensvermeidung gehört auch die Markierung und Kennzeichnung sicherheitsrelevanter Armaturen und Geräteteile. Ammoniak-Anlagen unterliegen dem Bundes-Immissionschutzgesetz und somit einer Genehmigungs- und Meldepflicht bei Störfällen. Für Absorptionswärmepumpen kommt ein vereinfachtes Genehmigungsverfahren nach §19 BmSchG in Betracht.

Als Mengel im Stand der Technik ist beim Betrieb von Absorptionswärmepumen eine sichere Verbindung mit der Umgebung (sekundäre Schutzmaßnahme) erforderlich, um im Störfall freiwerdendes Ammoniak an die Umgebung abzuführen, so dass keine Ammoniak-Gase oder Dämpfe in den Aufstellraum oder das Gebäude gelangen können.

Das Herstellen einer sicheren Verbindung mit der Umgebung stellt Einschränkungen hinsichtlich der Installation und der Installationsräume dar. Nicht jeder Kaminanschluss ist geeignet und auch der Anschluss mehrerer Geräte an denselben Kamin (Kaskade) kann dadurch erschwert werden. Die Verbindungstechnik mit der Umgebung wird durch den Anschluss einer Ammoniak-Absorptionswärmepumpe grundsätzlich zu einer sicherheitsrlevanten Verbindung, welche den Ansprüchen europäischer und nationaler Gesetzen genügen muss (z.B. Bundesimmssionsschutzgesetz in Deutschland). Diese führt zu einem erhöhten Aufwand bei der Installation und den Betrieb solcher Anlagen im Haushalt.

Einschränkungen bei der Installation und der Verbindungstechnik sollen durch das vorgeschlagenen, erfinderische Verfahren bzw. Anordnung aufgehoben werden und dem Kunden eine freie Installationswahl der Ammoniak-Absorptionswärmepumpe auch Gebäudeinneren, ggf. auch ohne Verbindung mit der Umgebung ermöglichen.

Aus der Patentanmeldung DE 10 2012 112 347 A1 ist es bekannt, eine Wärme- oder Kältebereitstellungsvorrichtung in einem Speicher mit einem Wärmeträgermedium anzuordnen, welches in der Lage ist, den Arbeitsstoff zu binden oder umzusetzen. Als Arbeitsstoff wird Ammoniak und als Wärmeträgermedium ein Gemisch aus Wasser, Glykol, Paraffin und Essigsäure genannt.

Die Patentschrift DE 195 25 064 C1 offenbart eine Wärmepumpenanlage mit den Merkmalen gemäß dem Oberbegriff von Anspruch 1.

Aufgabe der Erfindung ist es, eine Anordnung zu schaffen, mit der es möglich ist gefahrlos Ammoniak oder mit anderen gefährlichen, toxischen oder leichtentzündlichen Kältemitteln eine Kältemaschine oder Wärmepumpe zu betreiben, insbesondere eine Absorptionswärmepumpe.

Diese Aufgabe wird erfindungsgemäß durch eine Wärmepumpenanlage gemäß Anspruch 1 gelöst. Die abhängigen Ansprüche schützen Weiterbildungen der erfindungsgemäßen Wärmepumpenanlage.

Die Erfindung wird nun anhand der Figuren detailliert erläutert.

Es stellen dar:
Figur 1: Eine erfindungsgemäße Wärmepumpenanlage,
Figur 2: Eine Weiterbildung der erfindungsgemäßen Wärmepumpenanlage,
Figur 3: Eine alternative Weiterbildung der erfindungsgemäßen Wärmepumpenanlage,
Figur 4: Eine bevorzugte Weiterbildung der erfindungsgemäßen Wärmepumpenanlage.

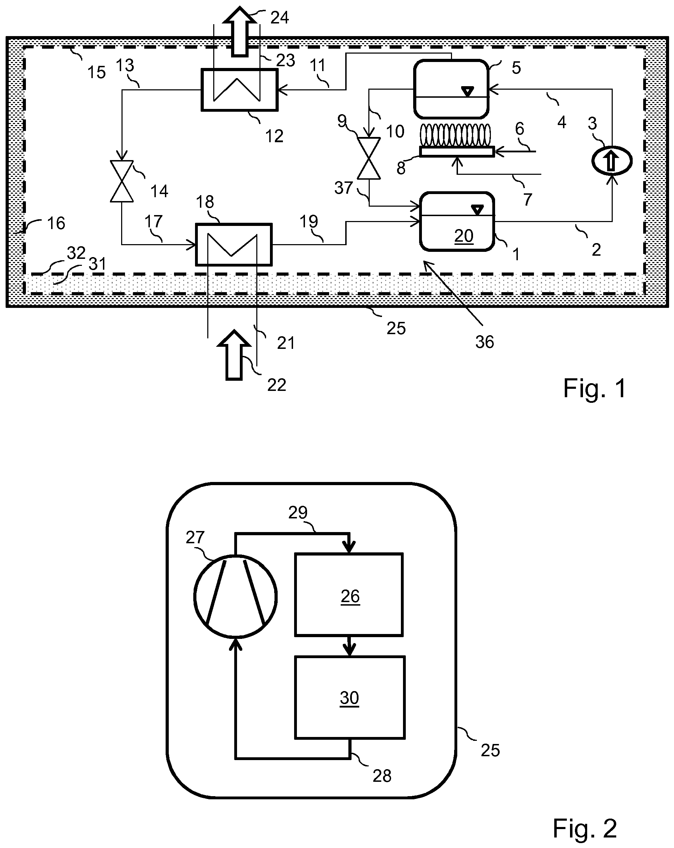

Figur 1 zeigt eine erfindungsgemäße Wärmepumpenanlage. Zur Lösung der Aufgabe ist die Wärmepumpe 36 mit einen druck- und diffusionsdichten Gehäuse 25 umgeben, welches beispielsweis aus Edelstahl ausgeführt sein kann. Desweiteren wird die Wärmepumpen 36 von einem inneren Gehäuse 15 umgeben, wobei die Gehäuse 15 und 25 einen Zwischenraum bilden, welche geeignet ist ein Sorptions- oder anderes Bindemittel für das Kältemittel aufzunehmen. Das Gehäuse innere 15 ist so gestaltet, dass es diffusionsoffen zum Bindemittel und zur Wärmepumpenanlage ist. Das innere Gehäuse 15 könnte beispielsweise aus einen Edelmetalldrahtgeflecht gebildet sein, dessen Maschenweite einen mittleren Durchmesser von 0,5mal des mittleren Durchmessers des Sorptions- oder Bindemittels beträgt. Am Boden der Wämepumpenanlage ist ein weiteres Gehäuse 32 angeordnet, welches zur Wärmepumpenanlage und zum inneren Gehäuse 15 hin diffusionsoffen ist oder diffusionsdicht ausgeführt sein kann. Dieses Gehäuse kann ebenfalls aus Drahtgeflecht gebildet sein und enthält das Bindemittel 31.

Aufgabe des Bindemittel 31 ist es die wässrige Ammoniaklösung oder anders Kältemittel aus den Leitungen 2, 4 13, 17, 19 und dem Tank 20 sowie die hochkonzentrierte flüssige Ammoniaklösungen aus dem Austreiber 5 und Leitungen 10, 37 aufzunehmen. Dabei ist die Aufnahmekapazität und das Volumen des Behälters 32 so ausgelegt, dass dieser die gesamte Kälte- und Lösungsmittelmenge aufnehmen kann plus einem Sicherheitsfaktor.

Das Bindemittel 31 im Gehäuse 32 ist eine organische Feststoffsäure, welche durch eine Neutralisationsreaktion die Ammonium-Kationen aufnimmt und fest bindet. Als feste organische Säuren können eingesetzt werden Natriumhydrogencarbonat, Sulfonsäure der Formel R-SO₃H, z.B. p-Toluolsulfonsäure, Ascorbinsäure, Brenztraubensäure, Oxalsäure.

Das Bindemittel 31 im Gehäuse 32 ist alternativ ein säureimprägniertes oder dotiertes Bindemittel, z.B. säureaktivierte Aktivkohle oder säureimprägnierte oder dotierte Zeolithe oder Zeolithe mit starker Acidität.

Die bei der Neutralisationsreaktion entstehende Reaktionswärme kann gemessen werden und ist ein Indiz für eine Leckage.

Das Bindemittel 31 ist alternativ ein Kationenaustauscher, welcher für die Aufnahme von Ammonium (NH₄⁺) geeignet ist. Der Kationenaustauscher ist dazu so gestaltet, dass dieser Ammonium-Kationen in einer Austauschreaktion aufnimmt und Alkali-Kationen dafür abgibt, z.B. Lithium-, Kalium- oder Natrium-Kationen. Oder der Kationenaustauscher ist dazu so gestaltet, dass dieser Ammonium-Kationen in einer Austauschreaktion aufnimmt und Erdalkali-Kationen dafür abgibt, z.B. Calcium- oder Magnesium-Kationen. Oder der Kationenaustauscher ist dazu so gestaltet, dass dieser Ammonium-Kationen in einer Austauschreaktion aufnimmt und dafür Mangan- oder Eisen-Kationen abgibt. Oder der Kationenaustauscher wird dazu aus Tetrapropylenbenzolsulfonat gebildet und gibt im Austausch Natrium-Kationen ab.

Die auszutauschenden Kationen sind auf einem Trägermaterial immobilisiert. Als Trägermaterial sind hoch-, meso- und mikroporöse Medien geeignet, welche einen Porendurchmesser des anderthalbfachen von Ammonium-Kationen besitzen oder von mindestens 1,52 Anström haben. Solche porösen Medien sind zum Beispiel geordnete mesoporöse Siligale (z.B. MCM 41), ungeordnete mesoporöse Siligagele, organische Feststoffe, wie zum Beispiel Phenol- oder Epoxidharze, Zeolithe, Metallorganische Rahmengerüste (metal-organic-frameworks MOF) oder Aktivkohle.

Faujasit-Zeolithe (FAU) in der Natriumform sind für den Kationenaustauch gut erforscht und werden für andere Anwendungen großtechnisch hergestellt. Aber auch Zeolithe vom Linde-Typ A (LTA) oder aus der Gruppe der Chabazite (CHA) sowie Clinotipolite können für den Kationenaustausch genutzt werden, auch Mordenit sind eine Option. Darüber hinaus kann die entstehende Wärmeentwicklung bei der Adsorption bzw. dem Kationenaustausch gemessen werden und kann als Indiz für eine Leckage ausgewertet werden.

Aufgabe des Bindemittels 16 ist es, mittels van der waalscher Bindungskräfte gasförmiges Ammoniaks aufzunehmen und zu binden. Das Bindemittel 16 kann eine säureaktivierte Aktivkohle sein. Die Menge der Aktivkohle ist so bemessen, dass diese die gesamte Ammoniak-Menge aus der Wärmepumpenanlage aufnehmen kann plus eines Sicherheitsfaktors.

Des Weiteren kann die Aktivkohle mit einem oder mehreren Kationenaustauscher dotiert sein. Als Kationenaustauscher kann einer der vorher genannten Kationenaustauscher genutzt werden.

Ein weiteres Konzept zur Bindung am Bindemittel 16 von gasförmigem Ammoniak ist die Kombination aus Kationenaustauscher und hochporösen wasserhaltigen Trägerstrukturen. Das Konzept sieht vor, dass an der Trägerstruktur (s.o.) Wasser adsorptiv gebunden ist. Besonders geeignete Strukturen sind MOF und Siligale sowie Aktivkohle wegen der schwachen Bindungskräfte zum Adsorptiv Wasser, aber auch Zeolithe sind möglich. Bei der Adsorption vom gasförmigen Ammoniak kommt es zunächst auf der Oberfläche zu einer Reaktion mit dem Wasser: Grenzflächenreaktion NH3 + H₂O ↔ NH₄⁺ + OH⁻

Die so gebildeten Ammonium-Kationen können nun auf der Oberfläche des Adsorbens gegen die dort immobilisierten Kationen, z.B. Kalium- oder Natrium-Kationen ausgetauscht werden. Des Weiteren kann die Trägerstruktur mit organischen Feststoffsäuren dotiert werden, um die beispielsweise gebildete Kali- oder Natronlauge wieder zu neutralisieren.

Figur 2 stellt eine Weiterbildung der erfindungsgemäßen Wärmepumpenanlage dar. Sollte die freie Konvektion nicht ausreichen, um im Leckage-Fall gasförmiges Ammoniak zu den oben vorgeschlagen Bindemitteln zu transportieren, wird eine hier eine erzwungene Konvektion ermöglicht. Im Leckagefall freiwerdender Ammoniak wird durch einen anliegenden Unterdruck durch die Sorptionsstufe 30 von dem Gebläse 27 abgesaugt. Die Sorptionsstufe wird aus den oben beschriebenen Bindemitteln 16 oder 31 oder einer Kombination aus diesen gebildet. Für das Gebläse 27 sind mehrere Betriebsweisen vorgesehen.
i Das Gebläse wird im Störbetrieb gestartet. Der Leckagefall kann beispielsweise durch einen Gassensor festgestellt werden.
ii Das Gebläse läuft kontinuierlich. In dieser Betriebsweise ist eine Gasdetektion nicht erforderlich.
iii In festgelegten Intervallen wird ein Mindestluftwechsel und Reinigungsintervall durchgeführt. Z.B. alle 24h wird die Wärmepumpenanlage mit den zwei bis dreifachen Spülluftmengen durchgespült und etwaige Ammoniakgaskonzentrationen ab gereinigt.
iv Eine Kombination der Betriebsweisen i bis iii ist ebenfalls denkbar.

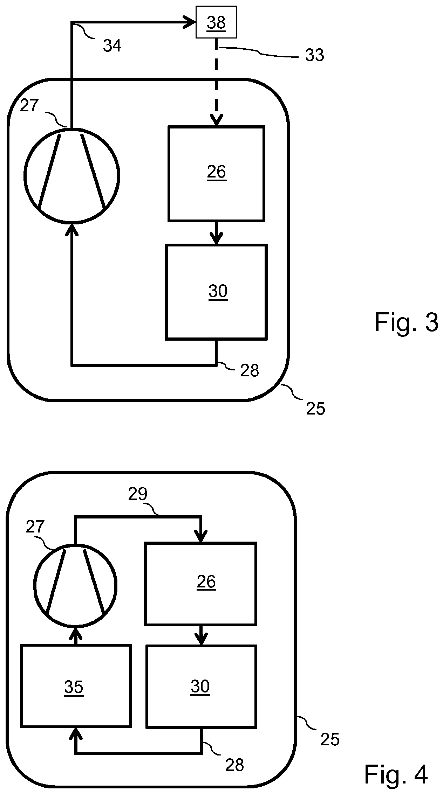

Die in Figur 1 und 2 dargestellten Anordnungen erlauben einen sicheren Betrieb, auch ohne Verbindung zur Umgebung. Figur 3 stellt eine alternative Weiterbildung der erfindungsgemäßen Wärmepumpenanlage dar. Im Fall der erzwungenen Konvention ist auch der sichere Betrieb mit Verbindung zur Umgebung vorstellbar, in dem über die Verbindung 33 Frischluft der Wärmepumpenanlage zugeführt wird und über die Sorptionseinheit 30 und die Leitung 28 die Fortluft dem Gebläse 27 zugeführt und von dort aus über die Leitung 34 als gereinigte Abluft in die Umgebung 38 abgegeben wird. Auch hier sind die oben genannten Betriebsweisen i bis iii für das Gebläse oder eine Kombination iv erfindungsgemäß vorgesehen.

Figur 4 stellt eine Weiterbildung zu der Wärmepumpenanlage in Figur 2 dar. Stromab der Sorptionsstufe 30 ist ein Brenner 35 angeordnet, der nicht sorbierte oder wieder desorbierte Reste des ausgetretenen Kältemittels verbrennt. Dies kann ein thermischer Brenner, zum Beispiel eine elektrisch betriebene Heizwendel mit einer Temperatur oberhalb der Selbstentzündungstemperatur des Kältemittels, eine Pilotflamme oder ein katalytischer Brenner sein. Dabei ist die Bezeichnung Brenner auf die Wirkung bezogen, nämlich Kältemittel zu verbrennen.

### Bezugszeichenliste

- 1: Absorber
- 2: Leitung zum Führen von Kältemittel angereicherter Lösung
- 3: Pumpe
- 4: Leitung zum Führen von Kältemittel angereicherter Lösung
- 5: Austreiber
- 6: Sauerstoffzuführung
- 7: Brennstoffzuführung
- 8: Brennereinheit
- 9: Expansionsventil
- 10: Leitung zum Führen des Lösungsmittels
- 11: Leitung zum Führen des Kältemitteldampfes
- 12: Verflüssiger
- 13: Leitung zum Führen des flüssigen Kältemittels
- 14: Druckreduzierungsventil
- 15: Inneres Gehäuse
- 16: erstes Bindemittel
- 17: Leitung zum Führen des flüssigen Kältemittels
- 18: Verdampfer
- 19: Leitung zum Führen des Kältemitteldampfes
- 20: Kältemittel angereicherte Lösung
- 21: Wärmeübertrager zum Einkoppeln von Niedertemperaturwärme
- 22: Niedertemperaturwärme, z.B. Umweltwärme
- 23: Wärmeübertrager zum Abführen von Nutzwärme
- 24: Nutzwärme
- 25: Druckstabiles und difussionsdichtes Gehäuse
- 26: Kältemaschine aus Figur 1 ohne 16 und 25
- 27: Gebläse
- 28: Abluftleitung von von der Sorptionsstufe (30)
- 29: Zuluftleitung zur Wärmepumpenanalge (26)
- 30: Sorptionstufe
- 31: zweites Bindemittel
- 32: Weiteres Gehäuse
- 33: Verbindung
- 34: Leitung
- 35: Brenner
- 36: Wärmepumpe
- 37: Leitung
- 38: Umgebung

## Patentansprüche

1. Wärmepumpenanlage, umfassend eine Wärmepumpe (36) mit Kältemittel und ein die Wärmepumpe (36) umgebendes Gehäuse (25), wobei das Gehäuse (25) druck- und diffusionsdicht ist, die Wärmepumpe (36) desweiteren mit einen inneren Gehäuse (15) umgeben ist, wobei die Gehäuse (15) und (25) einen Zwischenraum bilden, welcher ein erstes Bindemittel (16) zur Aufnahme der gasförmigen Phase von aus der Wärmepumpe (36) austretendem Kältemittel enthält, wobei das innere Gehäuse (15) so gestaltet ist, dass es diffusionsoffen das erste Bindemittel (16) und die Wärmepumpe (36) trennt, so dass die gasförmige Phase von aus der Wärmepumpe (36) austretenden Kältemittels zum ersten Bindemittel (16) gelangen kann, **dadurch gekennzeichnet, dass** am Boden der Wärmepumpenanlage ein weiteres Gehäuse (32) angeordnet ist, welches ein zweites Bindemittel (31) zur Aufnahme der flüssigen Phase von aus der Wärmepumpe (36) austretendem Kältemittel enthält.

2. Wärmepumpenanlage nach Anspruch 1, **dadurch gekennzeichnet, dass** das Kältemittel Ammoniak oder ein leicht entzündliches Kältemittel aus der Gruppe der Olefine, bevorzugt Propen, oder aus der Gruppe der Alkane, bevorzugt Propan oder Isobutan, oder aus der Gruppe der halogenierten Alkane ist.

3. Wärmepumpenanlage nach Anspruch 1 oder 2, **dadurch gekennzeichnet, dass** das diffusionsdichte Gehäuse (25) aus Edelstahl ausgeführt ist.

4. Wärmepumpenanlage einem der Ansprüche 1 bis 3, **dadurch gekennzeichnet, dass** das innere Gehäuse (15) aus einem Edelmetalldrahtgeflecht gebildet ist, dessen Maschenweite einen mittleren Durchmesser von 0,5 mal des mittleren Durchmessers des Sorptions- oder Bindemittels beträgt.

5. Wärmepumpenanlage nach einem der Ansprüche 1 bis 4, **dadurch gekennzeichnet, dass** das weitere Gehäuse (32) zur Wärmepumpen (36) und/oder zum inneren Gehäuse (15) hin diffusionsoffen ist.

6. Wärmepumpenanlage nach Anspruch 5, **dadurch gekennzeichnet, dass** das weitere Gehäuse (32) aus Drahtgeflecht gebildet ist.

7. Wärmepumpenanlage nach einem der Ansprüche 1 bis 6, **dadurch gekennzeichnet, dass** das erste Bindemittel (16) eine Aktivkohle, eine säureaktivierte Aktivkohle und/oder eine mit einem oder mehreren Kationenaustauscher dotierte Aktivkohle ist.

8. Wärmepumpenanlage nach einem der Ansprüche 1 bis 7, **dadurch gekennzeichnet, dass** das erste Bindemittel (16), eine Kombination aus Kationenaustauscher und hochporösen wasserhaltigen Trägerstrukturen, insbesondere MOF und Siligale sowie Aktivkohle oder Zeolithe ist.

9. Wärmepumpenanlage nach Anspruch 8, **dadurch gekennzeichnet, dass die** Trägerstruktur mit organischen Feststoffsäuren dotiert ist.

10. Wärmepumpenanlage nach einem der vorhergehenden Ansprüche, **dadurch gekennzeichnet, dass** das zweite Bindemittel (31) eine Aktivkohle, eine säureaktivierte Aktivkohle, eine mit einem oder mehreren Kationenaustauscher dotierte Aktivkohle, eine organische Feststoffsäure, ein säureimprägniertes oder dotiertes Bindemittel und/oder ein Kationenaustauscher, bei dem die auszutauschenden Kationen auf einem Trägermaterial immobilisiert sind, ist.

11. Wärmepumpenanlage nach einem der vorhergehenden Ansprüche, **dadurch gekennzeichnet, dass** die Wärmepumpenanlage ein Gebläse (27) und eine Sorptionsstufe (30) mit einem Bindemittel gemäß dem Kennzeichen der Ansprüche 7 oder 8 umfasst, wobei das Gebläse (27) und die Sorptionsstufe (30) so zusammenwirken, dass im Leckagefall freiwerdendes Kältemittel durch die Sorptionsstufe (30) von dem Gebläse (27) abgesaugt wird.

12. Wärmepumpenanlage nach Anspruch 11, **dadurch gekennzeichnet, dass** die stromab der Sorptionsstufe (30) ein Brenner (35) zum Verbrennen nicht sorbierter oder wieder desorbierter Reste des freigewordenen Kältemittels vorgesehen ist.

13. Wärmepumpenanlage nach Anspruch 12, **dadurch gekennzeichnet, dass** der Brenner (35) ein eine elektrisch betriebene Heizwendel, eine Pilotflamme oder ein katalytischer Brenner ist.

14. Wärmepumpenanlage nach einem der Ansprüche 11 bis 13, **dadurch gekennzeichnet, dass** stromab des Gebläses (27) eine Leitung (34) vorgesehen ist, die das Gebläse (27) mit der Umgebung (38) verbindet und eine Verbindung (33) zwischen Umgebung (38) und dem Innenraum der Wärmepumpenanlage vorgesehen ist, so dass gereinigte Abluft an die Umgebung abführbar und Frischluft dem Innenraum der Wärmepumpenanlage zuführbar ist.

15. Verfahren zum Betreiben einer Wärmepumpenanlage nach einem der Ansprüche 11 bis 14, **dadurch gekennzeichnet, dass** das Gebläse (27) und gegebenenfalls der Brenner (35) in regelmäßigen Abständen, bevorzugt alle 24 Stunden, jeweils solange betrieben wird, dass durch das Gebläse (27) das zwei- bis dreifache Volumen des Innenraums der Wärmepumpenanlage gefördert wird.

## Claims

1. Heat pump system, comprising a heat pump (36) with a coolant and a housing (25) surrounding the heat pump (36), wherein the housing (25) is pressure-tight and impermeable, the heat pump (36) is further surrounded by an inner housing (15), wherein the housings (15) and (25) form a space which contains a first binding agent (16) for receiving the gaseous phase of the coolant exiting from the heat pump (36), wherein the inner housing (15) is configured to permeably separate the first binding agent (16) and the heat pump (36), so that the gaseous phase of coolant exiting from the heat pump (36) can reach the first binding agent (16), **characterised in that** a further housing (32) is arranged at the bottom of the heat pump system, the housing containing a second binding agent (31) for receiving the liquid phase of coolant exiting from the heat pump (36).

2. Heat pump system according to claim 1, **characterised in that** the coolant is ammonia or a highly flammable coolant from the group of olefins, preferably propene, or from the group of alkanes, preferably propane or isobutene, or from the group of halogenated alkanes.

3. Heat pump system according to claim 1 or 2, **characterised in that** the impermeable housing (25) is formed of stainless steel.

4. Heat pump system according to any of claims 1 to 3, **characterised in that** the inner housing (15) is formed of a precious metal wire mesh with a mesh size having an average diameter of 0.5 times the average diameter of the sorbent or binding agent.

5. Heat pump system according to any of claims 1 to 4, **characterised in that** the further housing (32) is permeable to the heat pump (36) and/or the inner housing (15).

6. Heat pump system according to claim 5, **characterised in that** the further housing (32) is made of a wire mesh.

7. Heat pump system according to any of claims 1 to 6, **characterised in that** the first binding agent (16) is an activated carbon, an acid-activated activated carbon and/or an activated carbon doped with one or more cation exchangers.

8. Heat pump system according to any of claims 1 to 7, **characterised in that** the first binding agent (16) is a combination of cation exchanger and highly porous carrier structures containing water, in particular MOF and siligales as well as activated carbon or zeolites.

9. Heat pump system according to claim 8, **characterised in that** the carrier structure is doped with organic solid acids.

10. Heat pump system according to any of the preceding claims, **characterised in that** the second binding agent (31) is an activated carbon, an acid-activated activated carbon, an activated carbon doped with one or more cation exchangers, an organic solid acid, an acid-impregnated or doped binding agent and/or a cation exchanger in which the cations to be exchanged are immobilised on a carrier material.

11. Heat pump system according to any of the preceding claims, **characterised in that** the heat pump system comprises a fan (27) and a sorption stage (30) with a binding agent according to the characterising portion of claims 7 or 8, wherein the fan (27) and the sorption stage (30) interact in a way such that, in the event of a leakage, coolant released by the sorption stage (30) is extracted by the fan (27).

12. Heat pump system according to claim 11, **characterised in that** a burner (35) is provided downstream of the sorption stage (30) for burning the non-absorbed or desorbed remaining released coolant.

13. Heat pump system according to claim 12, **characterised in that** the burner (35) is an electrically operated heating coil, a pilot flame or a catalytic burner.

14. Heat pump system according to any of claims 11 to 13, **characterised in that** a pipe (34) is provided downstream of the fan (27) which connects the fan (27) to the environment (38) and a connection (33) is provided between the environment (38) and the interior of the heat pump system, such that cleaned exhaust air can be discharged to the environment and fresh air can be led into the interior of the heat pump system.

15. Method for operating a heat pump system according to any of claims 11 to 14, **characterised in that** the fan (27) and, if applicable, the burner (35) are each operated in regular intervals, preferably every 24 hours, until twice or three times the volume of the interior of the heat pump system is extracted by the fan (27).

## Revendications

1. Installation de pompe à chaleur, comprenant une pompe à chaleur (36) avec du fluide frigorigène et une enceinte (25) entourant la pompe à chaleur (36),
dans laquelle l'enceinte (25) est étanche à la pression et à la diffusion et la pompe à chaleur (36) est entourée en outre avec une enceinte intérieure (15),
dans laquelle les enceintes (15) et (25) forment un espace intermédiaire qui contient un premier agent liant (16) destiné à recevoir la phase gazeuse du fluide frigorigène sortant de la pompe à chaleur (36),
dans laquelle l'enceinte intérieure (15) est conçue de telle sorte qu'elle sépare, de manière ouverte à la diffusion, le premier agent liant (16) et la pompe à chaleur (36) de telle sorte que la phase gazeuse du fluide frigorigène sortant de la pompe à chaleur (36) peut arriver jusqu'à l'agent liant (16),
**caractérisée en ce qu'**une autre enceinte (32) est agencée au fond de l'installation de pompe à chaleur, laquelle autre enceinte contient un deuxième agent liant (31) destiné à recevoir la phase liquide du fluide frigorigène sortant de la pompe à chaleur (36).

2. Installation de pompe à chaleur selon la revendication 1, **caractérisée en ce que** le fluide frigorigène est de l'ammoniac ou un fluide frigorigène facilement inflammable choisi dans le groupe des oléfines, de préférence du propène, ou dans le groupe des alcanes, de préférence du propane ou de l'isobutane, ou dans le groupe des alcanes halogénisés.

3. Installation de pompe à chaleur selon la revendication 1 ou 2, **caractérisée en ce que** l'enceinte (25) étanche à la diffusion est réalisée en acier spécial.

4. Installation de pompe à chaleur selon l'une des revendications 1 à 3, **caractérisée en ce que** l'enceinte intérieure (15) est formée d'un treillis de fils en acier spécial dont la largeur de maille correspond à un diamètre moyen de 0,5 fois le diamètre moyen de l'agent liant ou sorbant.

5. Installation de pompe à chaleur selon l'une des revendications 1 à 4, **caractérisée en ce que** l'autre enceinte (32) est ouverte à la diffusion en direction de la pompe chaleur (36) et/ou de l'enceinte intérieure (15).

6. Installation de pompe à chaleur selon la revendication 5, **caractérisée en ce que** l'autre enceinte (32) est formée d'un treillis de fils.

7. Installation de pompe à chaleur selon l'une des revendications 1 à 6, **caractérisée en ce que** le premier agent liant (16) est un charbon actif, un charbon actif activé à l'acide et/ou un charbon actif dopé avec un ou plusieurs échangeurs de cations.

8. Installation de pompe à chaleur selon l'une des revendications 1 à 7, **caractérisée en ce que** le premier agent liant (16) est une combinaison d'échangeurs de cations et de structures porteuses aqueuses et très poreuses, en particulier des structures organo-métalliques (MOF, Metal Organic Framework) et des gels de silice ainsi que du charbon actif ou de la zéolithe.

9. Installation de pompe à chaleur selon la revendication 8, **caractérisée en ce que** la structure porteuse est dopée avec des acides solides organiques.

10. Installation de pompe à chaleur selon l'une des revendications précédentes, **caractérisée en ce que** le deuxième agent liant (31) est un charbon actif, un charbon actif activé à l'acide, un charbon actif dopé avec un ou plusieurs échangeurs de cations, un acide solide organique, un agent liant imprégné d'acide ou dopé et/ou un échangeur de cations dans lequel les cations à échanger sont immobilisés sur un matériau porteur.

11. Installation de pompe à chaleur selon l'une des revendications précédentes, **caractérisée en ce que** l'installation de pompe à chaleur comprend un ventilateur (27) et un étage sorbant (30) avec un agent liant selon la caractéristique des revendications 7 ou 8, le ventilateur (27) et l'étage sorbant (30) coopérant de telle sorte que du fluide frigorigène libéré en cas de fuite est aspiré via l'étage sorbant (30) par le ventilateur (27).

12. Installation de pompe à chaleur selon la revendication 11, **caractérisée en ce qu'**il est prévu en aval de l'étage sorbant (30) un brûleur (35) destiné à la combustion de résidus non sorbés ou à nouveau désorbés du fluide frigorigène libéré.

13. Installation de pompe à chaleur selon la revendication 12, **caractérisée en ce que** le brûleur (35) est une spirale de filament à fonctionnement électrique, une flamme pilote ou un brûleur catalytique.

14. Installation de pompe à chaleur selon l'une des revendications 11 à 13, **caractérisée en ce qu'**il est prévu en aval du ventilateur (27) une conduite (34) qui relie le ventilateur (27) à l'environnement (38) et il est prévu une liaison (33) entre l'environnement (38) et l'espace intérieur de l'installation de pompe à chaleur de telle sorte que de l'air rejeté par la ventilation et purifié peut être évacué vers l'environnement et de l'air frais peut être amené à l'espace intérieur de l'installation de pompe à chaleur.

15. Procédé de fonctionnement d'une installation de pompe à chaleur selon l'une des revendications 11 à 14, **caractérisé en ce que** le ventilateur (27) et le cas échéant le brûleur (35) sont exploités à intervalles réguliers, de préférence toutes les 24 heures, à chaque fois tant que deux à trois fois le volume de l'espace intérieur de l'installation de pompe à chaleur est transporté par le ventilateur (27).
